# EUROPÄISCHE PATENTANMELDUNG

(11) **EP 2 606 848 A1**
(43) Veröffentlichungstag der Anmeldung: **26.06.2013**
(21) Anmeldenummer: 13152439.9
(22) Anmeldetag: 24.01.2013
(51) Int. Cl.: A61C 1/08

(54) **Implantatbohrungspositioniervorrichtung**

(71) Anmelder: Fischler, Titus, 4314 Zeiningen (CH)
(72) Erfinder: Fischler, Titus, 4314 Zeiningen (CH)
(74) Vertreter: Latscha Schöllhorn Partner

(57) **Zusammenfassung**

Eine Implantatbohrungspositioniervorrichtung (1) zum Positionieren eines Instruments für das Applizieren einer Bohrung in einem Kieferknochen umfasst ein Richtelement (2) mit einem Körperabschnitt (22) und Verbindungsmitteln, die mit einem im Kieferknochen eingesetzten Referenzimplantat (21) verbindbar sind, wobei sich der Körperabschnitt (22) von den Verbindungsmitteln in eine axiale Richtung (23) erstreckt, und eine Führung (4), an der das Instrument anordbar ist, so dass in einer Grundstellung eine Bohrachse (43) des Instruments parallel zur axialen Richtung (23) des Körperabschnitts (22) des Richtelements (2) verläuft. Die Führung (4) ist über einen vordefinierten Bereich in Bezug auf das Richtelement (2) verkippbar. Mit der erfindungsgemässen Implantatbohrungspositioniervorrichtung (1) kann gewährleistet werden, dass mehrere Bohrungen im Kieferknochen auf effiziente Weise ausparallelisiert zueinander appliziert werden. Dabei können sie insbesondere soweit parallel zueinander ausgerichtet sein, dass ein reibungsloser vorgesehener Betrieb ermöglicht wird. Weiter kann die erfindungsgemässe Implantatbohrungspositioniervorrichtung (1) universell auf die vorgesehene Bestimmung der Bohrungen angewendet werden, so dass verhindert werden kann, dass eine individuelle Fertigung der Implantatbohrungspositioniervorrichtung (1) notwendig ist. Dies kann aus Kostengründen und aus Zeitgründen vorteilhaft sein.

## Beschreibung

### Technisches Gebiet

Die Erfindung betrifft eine Implantatbohrungspositioniervorrichtung zum Positionieren eines Instruments für das Applizieren mehrerer zueinander ausgerichteter Bohrungen in einem Kieferknochen. Insbesondere bezieht sich die Erfindung das Applizieren möglichst ausparallelisierter Bohrungen im Kieferknochen.

### Stand der Technik

In der Zahnmedizin werden heute regelmäßig beschädigte beziehungsweise kranke Zähne durch einen künstlichen Zahnersatz ersetzt. Dabei kann ein solcher Zahnersatz auf verschiedene Weise als Teil- oder Ganzzahnersatz sowie als festsitzender oder herausnehmbarer Zahnersatz ausgestaltet sein. Ein Zahnersatz umfasst häufig ein oder mehrere Zahnimplantate und eine Zahnprothese beziehungsweise eine Brückenkonstruktion. Beim Ersetzen wird das Zahnimplantat als künstliche Zahnwurzel an einem Zielort in einen Kieferknochen eingepflanzt. Dazu wird der Kieferknochen teilweise vorgängig aufbereitet, indem beispielsweise Knochensubstanz aufgebaut wird (Osseosynthese) beziehungsweise durch künstliches Gewebe ersetzt wird und indem ein Bohrloch am Zielort im Kieferknochen vorgesehen wird. Das Zahnimplantat wird dann im Allgemeinen beispielsweise über sein Schraubgewinde als enossales Zahnimplantat in den Kieferknochen eingedreht oder einfach eingesteckt. Innerhalb von typischerweise drei bis sechs Monaten verbindet sich das Zahnimplantat mit dem umgebenden Kieferknochen zu einer festen, belastungsfähigen Trägereinheit. Diesen Prozess bezeichnet man als Osseointegration. Zahnimplantate sind üblicherweise aus Titan oder auch aus keramischen Materialien hergestellt.

Auf das eingepflanzte Zahnimplantat wird teilwiese via ein Verbindungsstück beziehungsweise Abutment die Zahnprothese beziehungsweise Brückenkonstruktion aufgesetzt, wobei dazu heute eine Vielzahl verschiedener Mechanismen zur Verbindung des Implantats mit der Zahnprothese bekannt sind. Beispielsweise beschreibt die WO 2011/027229 (A2) ein Druckknopfsystem als solchen Verbindungsmechanismus, bei dem das Abutment beziehungsweise das Zahnimplantat ein Patrizenteil als Prothesenbefestigungsmittel beziehungsweise als Brückenbefestigungsmittel aufweist und die Zahnprothese ein entsprechendes Matrizenteil. Die Zahnprothese kann mittels dieser Druckknopfsysteme bequem auf den Kiefer aufgeschnappt und wieder davon entfernt werden.

Ein heute häufig vorkommendes Problem bei einem Zahnersatz wie oben beschrieben resultiert aus dem Umstand, dass die Position des Zahnimplantats die Position und Stellung der Prothesenbefestigungsmittel beziehungsweise der Brückenbefestigungsmittel maßgeblich beeinflusst und teilweise vorbestimmt. Da aber die exakte Position des Zahnimplantats von verschiedenen Faktoren abhängt, wie beispielsweise vom Zustand des Kieferknochens, vom Verlauf einer allfälligen Osseosynthese und insbesondere auch von einer exakten Insertion des Zahnimplantats, können heute regelmäßig Zahnprothesen nicht ohne Weiteres exakt an einer gewünschten Zielposition und in einer gewünschten Zielstellung gesetzt werden.

Dieses Problem ist insbesondere bedeutend bei Zahnprothesen beziehungsweise Brückenkonstruktionen, die über mehrere Zahnimplantate mit dem Kieferknochen verbunden werden und die beispielsweise für den Ersatz mehrerer Zähne vorgesehen sind. Für einen solchen Zahnersatz ist es essentiell, dass die Zahnimplantate und die zugehörigen Prothesenbefestigungsmittel beziehungsweise Brückenbefestigungsmittel jeweils möglichst genau in einer Zielposition angeordnet sind. Insbesondere sollen die Prothesenbefestigungsmittel beziehungsweise Brückenbefestigungsmittel üblicherweise möglichst parallel zueinander angeordnet sein, um eine einfaches, stabiles und verschleissfreies Verbinden der Zahnprothese mit den Zahnimplantaten zu ermöglichen. Beispielsweise können mit den oben erwähnten Druckknopfsystemen Diaparallelitäten zwischen Zahnimplantaten von maximal gegen etwa 40° ausgeglichen werden, wobei schon bei geringeren Diaparallelitäten die Verbindung beziehungsweise der Tragkomfort der Prothese beziehungsweise der Brückenkonstruktion beeinträchtigt werden kann.

Um zu verhindern, dass für den Ersatz mehrerer Zähne vorgesehene Zahnimplantate zu stark disparallel beziehungsweise geneigt zueinander eingepflanzt werden, sind heute Systeme und Verfahren im Einsatz, die ein möglichst paralleles Einsetzen von Zahnimplantaten ermöglichen sollen. Insbesondere wird dabei versucht, zu gewährleisten, dass die Bohrungen im Kieferknochen, in die die Zahnimplantate eingeschraubt beziehungsweise eingepflanzt werden sollen, so parallel wir möglich zueinander ausgerichtet sind. Dazu werden typischerweise Bohrschablonen eingesetzt, in denen Führungslöcher vorgesehen, welche die Position und die Ausrichtung des Bohrinstruments beim Applizieren der Bohrungen in den Kieferknochen vorbestimmen.

Beispielsweise ist in der US 2010/0075275 A1 ein System beschrieben, bei dem der Kieferknochen beispielsweise über ein dreidimensionales, bildgebendes Tomographie-Verfahren wie die digitale Volumentomographie (DVT) genau ausgemessen wird und dann eine Kieferschiene als Bohrschablone angepasst an die ausgemessene Situation gefertigt wird. Die Bohrschablone umfasst Führungslöcher, die an vordefinierten Positionen und in vordefinierten Ausrichtungen vorgesehen sind. In Anwendung wird die Bohrschablone dann auf den Kiefer aufgesetzt und über die Führungslöcher werden mittels eines geeigneten Instruments Bohrungen am Kieferknochen angebracht, in die dann die Implantate eingesetzt werden. Über die Verwendung der Bohrschablone können die Implantate verhältnismässig genau zueinander ausgerichtet sein und übermässige Disparallelitäten können vermieden werden.

Allerdings müssen solche Bohrschablonen beispielsweise der vorstehend beschriebenen Art nach dem Vermessen des Kiefers individuell auf den vorgesehenen Kiefer angepasst gefertigt werden. Die Herstellung solcher Bohrschablonen ist entsprechend typischerweise verhältnismässig aufwändig und teuer. Zudem nimmt es einige Zeit in Anspruch, die Bohrschablone individuell zu fertigen bevor die eigentlichen Bohrungen appliziert werden können, was nachteilig sein kann.

Vor diesem Hintergrund besteht ein Bedürfnis nach einem System, das eine einfache, genaue und effiziente Applikation von Bohrungen in einem Kieferknochen ermöglicht, wobei Disparallelitäten zwischen den Bohrungen von unerwünschtem Ausmass verhindert werden sollen.

### Darstellung der Erfindung

Die Aufgabe wird erfindungsgemäss durch eine Implantatbohrungspositioniervorrichtung beziehungsweise Bohrlehre gelöst, wie sie im unabhängigen Anspruch 1 definiert ist. Vorteilhafte Ausführungsvarianten der Erfindung ergeben sich aus den abhängigen Ansprüchen.

Das Wesen der Erfindung besteht im Folgenden: Eine Implantatbohrungspositioniervorrichtung beziehungsweise eine Bohrlehre zum Positionieren eines Instruments für das Applizieren einer Bohrung in einem Kieferknochen umfasst ein Richtelement mit einem Körperabschnitt und Verbindungsmitteln, die mit einem im Kieferknochen eingesetzten Referenzimplantat verbindbar sind. Dabei erstreckt sich der Körperabschnitt von den Verbindungsmitteln in eine axiale Richtung. Die Implantatbohrungspositioniervorrichtung umfasst weiter eine Führung, an der das Instrument anordbar ist und die so mit dem Richtelement verbunden ist, dass in einer Grundstellung eine Bohrachse des Instruments parallel zur axialen Richtung des Körperabschnitts des Richtelements verläuft. Die Führung ist dabei über einen vordefinierten Bereich in Bezug auf das Richtelement aus der Grundstellung verkippbar.

Der Begriff "Positionieren" im Zusammenhang mit der Erfindung bezieht sich auf ein Platzieren und Ausrichten des Instruments. Insbesondere kann das Instrument dabei über die Implantatbohrungspositioniervorrichtung positioniert werden, indem es an einer bestimmungsgemässen Position beziehungsweise Stelle angeordnet - also platziert - und in einer bestimmungsgemässen Stellung ausgerichtet wird, so dass die Bohrung exakt und kontrolliert bestimmungsgemäss im Kieferknochen appliziert werden kann. Der Begriff "Bohrachse" bezieht sich im Zusammenhang mit dem Instrument auf die Achse beziehungsweise Richtung, in die das Instrument die Bohrung bestimmungsgemäss appliziert. Als Instrument zum Applizieren der Bohrung im Kieferknochen können verschiedene geeignete Vorrichtungen wie beispielsweise Bohrer und insbesondere mit verhältnismässig geringer Drehzahl rotierende Bohrer eingesetzt werden. Der Begriff "axiale Richtung" bezieht sich im Zusammenhang mit dem Richtelement auf eine Ausdehnung seines Körperabschnitts, wobei der Körperabschnitt insbesondere länglich ausgestaltet sein kann. Bei auf dem Referenzimplantat aufgesetzter Implantatbohrungspositioniervorrichtung kann die axiale Richtung axial zum Referenzimplantat verlaufen. Der längliche Körperabschnitt des Richtelements kann dabei insbesondere länglich als Stange beispielsweise mit einem im Wesentlichen kreisförmigen Querschnitt ausgestaltet sein.

In der Grundstellung der Führung ermöglicht die erfindungsgemässe Implantatbohrungspositioniervorrichtung, dass das an der Führung angeordnete Instrument eine oder auch mehrere parallele Bohrungen im Kieferknochen applizieren kann. Indem die Führung über den vordefinierten Bereich in Bezug auf das Richtelement aus der Grundstellung kippbar ausgestaltet ist, kann die Bohrrichtung des an der Führung angeordneten Instruments in eingeschränktem vordefiniertem Ausmass zu der axialen Richtung des Richtelements angewinkelt werden. Dies ermöglicht, dass eine durch das an der Führung angeordnete Instrument applizierte Bohrung im Kieferknochen in einem Bohrwinkel zu der axialen Richtung des Richtelements und somit zum Referenzimplantat ausgestaltet wird. Dabei kann der Bohrwinkel über die maximale Verkippbarkeit der Führung so vordefiniert eingeschränkt werden, dass die applizierte Bohrung bis zu einem maximalen noch ausgleichbaren Versatz angewinkelt zum Referenzimplantat liegt.

Auf diese Weise können mittels der Implantatbohrungspositioniervorrichtung Disparallelitäten in einem vordefinierten Ausmass gehalten werden. Entsprechend kann gewährleistet werden, dass mehrere Bohrungen im Kieferknochen soweit parallel zueinander ausgerichtet sind, dass ein reibungsloser vorgesehener Betrieb ermöglicht wird. Beispielsweise kann mittels der erfindungsgemässen Implantatbohrungspositioniervorrichtung gewährleistet werden, dass die mehreren Bohrungen und darin eingepflanzte beziehungsweise eingesetzte Implantate maximal so stark disparallel zueinander liegen, dass eine Zahnprothese effizient und verschleissarm über Druckknopfverbindungen mit dem Kieferknochen verbunden werden kann. Insbesondere kann die erfindungsgemässe Implantatbohrungspositioniervorrichtung dabei beispielsweise so ausgestaltet sein, dass die Disparallelitäten zwischen den Bohrungen genau maximal so sind, dass sie von den Matrizen der Druckknopfverbindung und insbesondere von deren Retentionseinsätzen noch ausgeglichen werden können.

Weiter kann die erfindungsgemässe Implantatbohrungspositioniervorrichtung universell angewendet werden. Entsprechend kann verhindert werden, dass eine individuelle Fertigung der Implantatbohrungspositioniervorrichtung notwendig ist. Dies kann unter anderem aus Kostengründen und aus Zeitgründen vorteilhaft sein.

Vorzugsweise ist die Führung in einer die Bohrachse umfassenden ersten Kippebene in Bezug auf das Richtelement über einen ersten Kippwinkelbereich verkippbar ist. Dabei kann die Führung entweder ausschliesslich auf das Richtelement zu, ausschliesslich vom Richtelement weg oder insbesondere sowohl auf das Richtelement zu als auch vom Richtelement weg verkippbar sein. Der erste Kippwinkelbereich kann beispielsweise durch geeignet ausgestaltete Anschläge genau vordefiniert sein. So ermöglicht der erste Kippwinkelbereich, dass die maximale Neigung beziehungsweise die maximale Disparallelität zwischen Referenzimplantat und zu applizierender Bohrung einen vordefinierten Wert nicht überschreitet. Dieser maximale Wert kann insbesondere so bemessen sein, dass die maximale Neigung beispielsweise wie oben erwähnt von einer Druckknopfverbindung noch ausgeglichen werden kann und somit ein einwandfreier Betrieb möglich ist. Der maximale Kippwinkel des ersten Kippwinkelbereichs kann etwa 20° sein, wobei die Führung in der Grundstellung beispielsweise etwa 10° auf das Richtelement zu und etwa 10° vom Richtelement weg verkippbar sein kann. Die Implantatbohrungspositioniervorrichtung kann auch eine erste Rasterung aufweisen, über die die Verkippung der Führung in der ersten Kippebene gerastert beziehungsweise abgestuft erfolgen kann.

Vorzugsweise ist die Führung in einer im Wesentlichen senkrecht zur ersten Kippebene liegenden zweiten Kippebene in Bezug auf das Richtelement über einen zweiten Kippwinkelbereich verkippbar. Dabei kann die Führung entweder ausschliesslich in einer Richtung aus der ersten Kippebene oder in beide Richtungen aus der ersten Kippebene in der zweiten Kippebene verkippbar sein. Der zweite Kippwinkelbereich kann beispielsweise durch geeignet ausgestaltete Anschläge genau vordefiniert sein. So ermöglicht der zweite Kippwinkelbereich eventuell zusammen mit dem ersten Kippwinkelbereich, dass die maximale Disparallelität zwischen Referenzimplantat und neuer Bohrung einen vordefinierten Wert nicht überschreitet. Dieser maximale Wert kann insbesondere so bemessen sein, dass die maximale Neigung noch ausgeglichen werden kann und somit ein einwandfreier Betrieb möglich ist. Der maximale Kippwinkel des zweiten Kippwinkelbereichs kann etwa 20° sein, wobei die Führung aus der Grundstellung beispielsweise etwa 10° in beide Richtungen aus der ersten Kippebene verkippbar sein kann. Die Implantatbohrungspositioniervorrichtung kann auch eine zweite Rasterung aufweisen, über die die Verkippung der Führung in der zweiten Kippebene gerastert beziehungsweise abgestuft erfolgen kann.

Die gleichzeitige Verkippbarkeit der Führung in der ersten Kippebene und in der zweiten Kippebene kann auf verschiedene Weisen implementiert sein. Beispielsweise können zwei getrennt Gelenke vorgesehen sein, von denen eines in der ersten Kippebene und das andere in der zweiten Kippebene auslenkbar ist. Oder es kann ein einziges in den beiden Ebenen auslenkbares Gelenk wie beispielsweise ein Kugelgelenk vorgesehen sein.

Mittels der in der ersten Kippebene sowie in der zweiten Kippebene verkippbaren Führung kann die Führung in alle Richtungen bezüglich des Richtelements verkippt werden, wobei die maximale Verkippung vordefiniert ist. Damit kann die Implantatbohrungspositioniervorrichtung eine flexible sichere Applikation von Bohrungen in frei ausgerichteten Bohrwinkeln mit einem fest vorgegeben Versatz beziehungsweise einer fest vorgegebenen Neigung gewährleisten.

Vorzugsweise umfasst die Implantatbohrungspositioniervorrichtung ein am Richtelement montiertes Abstandselement, das sich in einem bezüglich der axialen Richtung des Körperabschnitts des Richtelements vordefinierten Abstandswinkel zum Richtelement erstreckt, wobei die Führung verkippbar am Abstandselement montiert ist. Das Abstandselement kann ähnlich wie oben im Zusammenhang mit dem Körperabschnitt des Richtelements erwähnt länglich beispielsweise als Stange oder auch gebogen ausgestaltet sein. Der Abstandswinkel kann insbesondere einem im Wesentlichen rechten Winkel entsprechen. Über ein solches Abstandselement kann die Führung seitlich beabstandet vom Richtelement ausgestaltet sein, wodurch seitlich zum Referenzimplantat versetzte Bohrungen mit der vordefinierten maximalen Neigung am Kieferknochen appliziert werden können.

Dabei ist die Führung vorzugsweise über ein Gelenk verkippbar am Abstandselement montiert. Über ein solches Gelenk kann die Führung auf einfache Weise insbesondere in der ersten Kippebene verkippbar ausgestaltet sein. Das Gelenk weist dabei vorzugsweise mindestens zwei Anschläge auf, die eine Auslenkung beziehungsweise Biegung des Gelenks begrenzen. Auf diese Weise kann der entsprechende Kippwinkelbereich der Führung in Bezug auf das Richtelement, der insbesondere dem ersten Kippwinkelbereich entsprechen kann, festgelegt sein. Eine solche Ausführung mit einem insbesondere beschränkt biegbaren Gelenk kann eine verhältnismässig einfache effiziente Ausführung der Implantatbohrungspositioniervorrichtung ermöglichen.

Weiter ist das Abstandselement vorzugsweise um seine Längsachse rotierbar. Über ein solches rotierbares Abstandselement kann die Führung auf einfache Weise insbesondere in der zweiten Kippebene verkippbar ausgestaltet sein. Dabei weist das Abstandselement vorzugsweise mindestens zwei Anschläge auf, die eine Rotation des Abstandselements um seine Längsachse in beide Richtungen begrenzen. Auf diese Weise kann der entsprechende Kippwinkelbereich der Führung in Bezug auf das Richtelement, der insbesondere dem zweiten Kippwinkelbereich entsprechen kann, festgelegt sein. Eine solche Ausführung mit einem insbesondere beschränkt rotierbaren Abstandselement kann eine verhältnismässig einfache effiziente Ausführung der Implantatbohrungspositioniervorrichtung ermöglichen. Bevorzugt kann auch eine Kombination der Ausführung mit einem Gelenk und der Ausführung mit einem rotierbaren Abstandselement eine einfache zweckmässige Ausgestaltung der bezüglich des Richtelements in alle Richtungen verkippbaren Führung ermöglichen.

Vorzugsweise ist das Abstandselement entlang der axialen Richtung verschiebbar am Richtelement montiert ist. Eine solche Implantatbohrungspositioniervorrichtung ermöglicht, dass über ein in der Führung montiertes Instrument Bohrungen in der Höhe versetzt zum Referenzimplantat am Kieferknochen appliziert werden können. Dadurch kann die Implantatbohrungspositioniervorrichtung auf effiziente Weise an die Gegebenheiten im Mund eines Patienten angepasst werden, ohne dass das Instrument diesbezüglich angepasst in der Führung montiert werden muss. Auch ist das Abstandselement vorzugsweise um das Richtelement herum drehbar ist. Dies ermöglicht, dass beim am Referenzimplantat montierten Richtelement Bohrungen an einer beliebigen Stelle im Umfang des Referenzimplantats am Kieferknochen appliziert werden können.

Vorzugsweise ist das Abstandselement längenverstellbar ausgestaltet, so dass ein Abstand der zwischen Führung und Richtelement einstellbar ist. Auf diese Weise kann die Implantatbohrungspositioniervorrichtung wiederum auf effiziente Weise an die Gegebenheiten im Mund eines Patienten angepasst werden. Insbesondere kann damit der Abstand der Bohrungen zueinander flexibel eingestellt werden. Eine solche Implantatbohrungspositioniervorrichtung kann auch auf effiziente Weise universell einsetzbar sein. Zur Längenverstellung umfasst das Abstandselement vorzugsweise eine Teleskophülse und eine Stange, wobei die Stange die Teleskophülse durchragt und wobei die Stange entlang seiner Längsachse bezüglich der Teleskophülse verschiebbar ist. Die Stange kann starr oder auch knickbar ausgestaltet sein. Die Teleskophülse des Abstandselements ist vorzugsweise um die axiale Richtung herum drehbar und entlang der axialen Richtung verschiebbar am Körperabschnitt des Richtelements montiert.

Vorzugsweise umfasst die Führung eine Führungshülse. Eine solche Führungshülse ermöglicht eine einfache Implementierung der Führung, wobei das Instrument die Führungshülse durchragend in der Führung eingesetzt und von dieser gehalten werden kann. Dabei ist die Führungshülse vorzugsweise einseitig offen ausgestaltet. Eine solche offene Führungshülse ermöglicht eine freie Sicht auf das Instrument, wenn es in der Führung eingesetzt ist, was eine vereinfachte und tiefengesicherte Handhabung bei der Applikation einer Bohrung ermöglicht.

Ein weiterer Aspekt der vorliegenden Offenbarung betrifft ein Verfahren zum Applizieren mehreren Bohrungen in einem Kieferknochen mittels einer Implantatbohrungspositioniervorrichtung wie vorstehend beschrieben. Dabei wird vorzugsweise in einem für den Operateur gut sichtbaren Bereich mittels eines geeigneten Instruments eine Referenzbohrung in einem Kieferknochen angebracht und ein Referenzimplantat in die Referenzbohrung eingesetzt. Auf das okklusale Ende des Referenzimplantats wird ein Richtelement mit einem Körperabschnitt und Verbindungsmitteln aufgesetzt, wobei die Verbindungsmittel mit dem Referenzimplantat verbunden sind. Der Körperabschnitt erstreckt sich dabei von den Verbindungsmitteln in eine axiale Richtung.

Das Instrument wir dann in einer Führung der Implantatbohrungspositioniervorrichtung angeordnet und an einer vorgesehenen Stelle am Kieferknochen platziert. Die Führung wird dann innerhalb des möglichen vorgegeben Kippbereichs so gekippt, dass das Instrument zweckmässige ausgerichtet ist. Mittels des in der Führung angeordneten Instruments wird dann eine Pilotbohrung im Kieferknochen appliziert.

Mittels eines solchen Verfahrens kann die Implantatbohrungspositioniervorrichtung effizient eingesetzt werden und die diesbezüglich oben beschriebenen Vorteile erzielt werden. Insbesondere kann die Implantatbohrungspositioniervorrichtung je nach Ausgestaltung auch wie oben beschrieben angepasst und eingestellt werden.

### Kurze Beschreibung der Zeichnungen

Weitere vorteilhafte Ausgestaltungen der Erfindung ergeben sich aus der nachfolgenden Beschreibung von Ausführungsbeispielen der Erfindung mit Hilfe der schematischen Zeichnung. Insbesondere wird im Folgenden die erfindungsgemässe Implantatbohrungspositioniervorrichtung unter Bezugnahme auf die beigefügten Zeichnungen anhand von Ausführungsbeispielen detaillierter beschrieben. Es zeigen:
- Fig. 1: eine seitliche Ansicht an ein Ausführungsbeispiel einer erfindungsgemässen Implantatbohrungspositioniervorrichtung in einer Grundstellung;
- Fig. 2: eine Rückansicht der Implantatbohrungspositioniervorrichtung von Fig. 1; und
- Fig. 3: eine Aufsicht der Implantatbohrungspositioniervorrichtung von Fig. 1.

### Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen" und "nach aussen" bezeichnen Richtungen hin zum oder weg vom geometrischen Mittelpunkt der Implantatbohrungspositioniervorrichtung sowie benannter Teile derselben. Die Terminologie umfasst die oben ausdrücklich erwähnten Wörter, Ableitungen von denselben und Wörter ähnlicher Bedeutung.

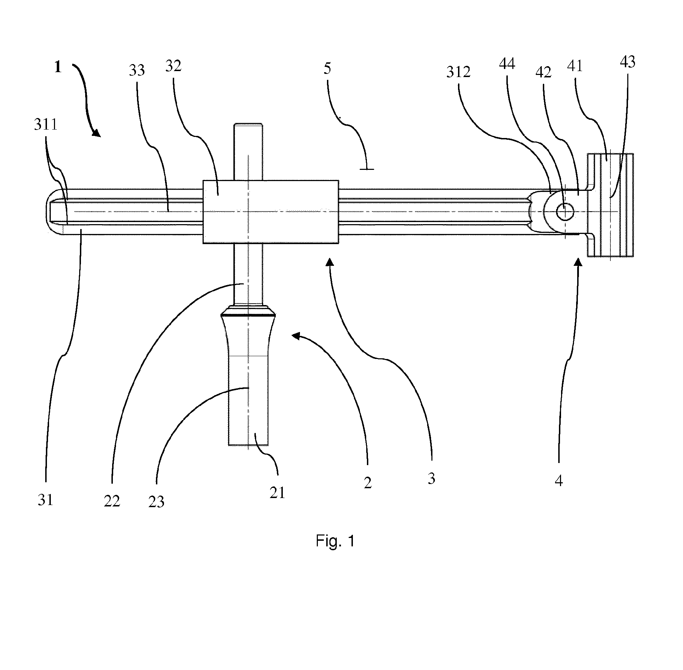

In Fig. 1 ist ein Ausführungsbeispiel einer erfindungsgemässen Implantatbohrungspositioniervorrichtung 1 mit einem Richtelement 2, einem Abstandselement 3 und einer Führung 4 gezeigt. Das Richtelement 2 weist eine Implantatbefestigung als Verbindungsmittel und einen daran anschliessenden Körperabschnitt 22 auf. Die Implantatbefestigung ist dazu ausgestaltet, an der okklusalen Seite eines Implantats insbesondere eines Referenzimplantats 21 befestigt und mit diesem verbunden zu werden. Dazu ist die Implantatbefestigung angepasst an das Referenzimplantat 21 ausgestaltet, wobei sie je nach Typ des Implantats unterschiedlich beschaffen sein kann. Insbesondere kann sie beispielsweise als Gewinde ausgestaltet sein, das wie in Fig. 1 gezeigt in das Referenzimplantat 21 einschraubbar ist. Der Körperabschnitt 22 des Richtelements 2 ist länglich als starre Stange mit einem kreisförmigen Querschnitt ausgestaltet. Er erstreckt sich von der Implantatbefestigung beziehungsweise vom Referenzimplantat 21 in axialer Richtung 23, das heisst in Fig. 1 vertikal nach oben.

Das Abstandselement 3 umfasst eine starre Abstandsstange 31 und eine Teleskophülse 32. Die Teleskophülse 32 wird von der Abstandsstange 31 durchragt, so dass diese in einem rechten Winkel als Abstandswinkel zur axialen Richtung 23 des Richtelements 2 von der Teleskophülse 32 gehalten wird. Das Abstandselement 3 weist eine Längsachse 33 auf, die der Längsachse der Abstandsstange 31 entspricht und die rechtwinklig zur axialen Richtung 23 des Richtelements verläuft, also in Fig. horizontal von links nach rechts. Die Abstandsstange 31 ist im Wesentlichen kreiszylindrisch ausgestaltet, wobei entlang der Längsachse 33 zwei sich gegenüberliegende Nuten ausgestaltet sind, so dass die Abstandsstange 31 gegenüberliegend jeweils zwei longitudinale Anschläge 311 aufweist. An seinem einen Längsende, in Fig. 1 ist es das rechte Längsende, ist ein Gelenkkopf 312 als erster Teil eines Scharniergelenks an der Abstandsstange 31 ausgebildet.

Der Gelenkkopf 312 der Abstandsstange 31 ist in einer Gelenkzange 42 der Führung 4 angeordnet, wobei die Gelenkzange 42 und der Gelenkkopf 312 von einem Bolzen 44 zusammengehalten wird. Die Gelenkzange 42, der Gelenkkopf 312 und der Bolzen 44 bilden so zusammen das Scharniergelenk, welches die Abstandsstange 31 des Abstandselements 3 mit der Führung 4 verbindet. Die Gelenkzange 42 ist fest mit einer Führungshülse 41 der Führung 4 verbunden. Die Führungshülse 41 ist dazu ausgestaltet, ein Instrument zum Applizieren einer Bohrung in einem Kieferknochen aufzunehmen und zu halten. Dabei entspricht eine Längsachse der Führungshülse 41 einer Bohrachse 43 des Instruments.

In der in Fig. 1 dargestellten Grundstellung der Implantatbohrungspositioniervorrichtung 1 verläuft die Bohrachse 43 der Führung 4 beziehungsweise des in seiner Führungshülse 41 angeordneten Instruments parallel zur axialen Richtung 23 des Körperabschnitts 22 des Richtelements 2. Das heisst die Bohrachse 43 verläuft in Fig. 1 ebenfalls vertikal von oben nach unten. In der Grundstellung liegen die Längsachse 33 des Abstandselements 3 und die Bohrachse 43 der Führung 4 in einer gemeinsamen Ebene, die eine erste Kippebene 5 bildet.

Über das Scharniergelenk ist die Führung 4 in Bezug auf das Richtelement 2 und das Abstandselement 3 in der ersten Kippebene 5 verkippbar. Dabei weist der Gelenkkopf 312 der Abstandsstange 31 einen oberen und einen unteren Anschlag 313 auf, an die die Führungshülse 41 bei einem Verkippen anstösst. Diese Anschläge 313 begrenzen somit die Verkippbarkeit der Führung 4 bezüglich des Richtelements 2 beziehungsweise bezüglich des Abstandselements 3. Insbesondere sind die Anschläge 313 des Gelenkkopfs 312 der Abstandsstange 31 so ausgestaltet, dass die Führung 4 in beide Richtungen um etwa 10° aus der Grundstellung verkippt werden kann. Das heisst die Führung 4 kann aus der Grundstellung 10° im Uhrzeigersinn und 10° im Gegenuhrzeigersinn in der ersten Kippebene 5 verkippt werden. Auf diese Weise wird ein erster Kippwinkelbereich festgelegt, in dem die Führung 4 in der ersten Kippebene 5 bezüglich des Richtelements 2 verkippbar ist.

Für die gesamte weitere Beschreibung gilt folgende Festlegung. Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind außerdem im unmittelbar zu einer Figur gehörigen Beschreibungstext Bezugszeichen erwähnt, die in der zugehörigen Figur nicht enthalten sind, so wird auf die vorangehenden Figuren verwiesen.

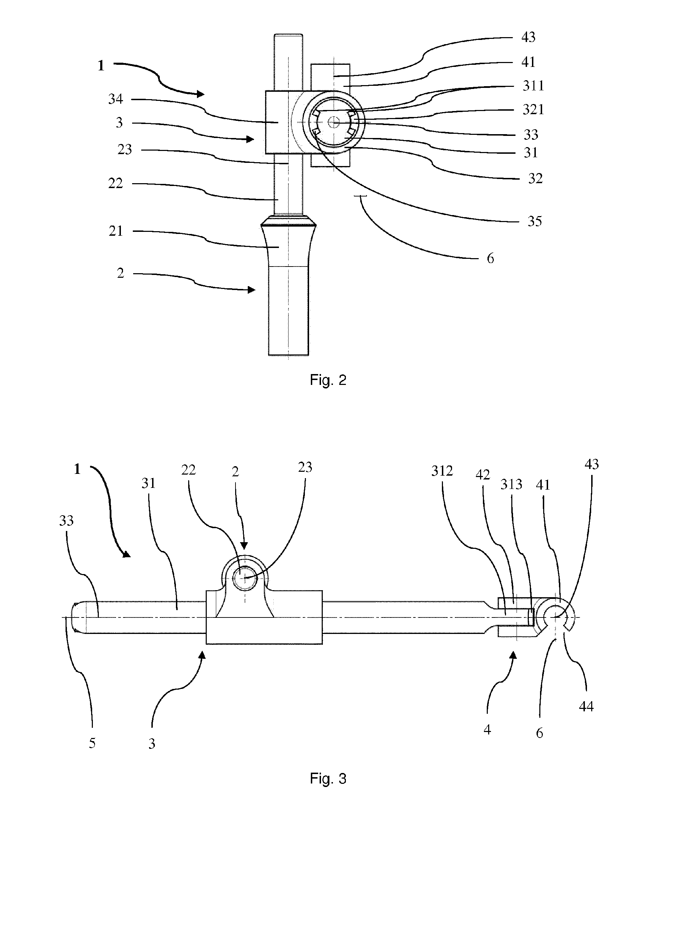

Fig. 2 zeigt die Implantatbohrungspositioniervorrichtung 1 von hinten, das heisst von einer dem Gelenkkopf 312 der Abstandsstange 31 abgewandten Längsende der Abstandsstange 31 her. Dabei ist ersichtlich, dass die Teleskophülse 32 des Abstandselements 3 auf einer Seite, in Fig. 2 ist dies die linke Seite, in eine Montagehülse 34 übergeht, die vom Körperabschnitt 22 des Richtelements 2 durchragt ist. Die Montagehülse 34 ist somit entlang des Körperabschnitts 22 also in axialer Richtung beziehungsweise nach oben und unten verschiebbar. Dadurch sind das Abstandselement 3 und die Führung 4 höhenverstellbar am Richtelement 2 montiert. Zudem ist Montagehülse 34 somit um den Körperabschnitt 22 herum drehbar, so dass auch das Abstandselement 3 und die Führung 4 um das Richtelement 2 gedreht werden können.

Weiter ist in Fig. 2 ersichtlich, dass an einer Innenfläche der Teleskophülse 32 des Abstandselements 3 zwei einander gegenüberliegenden Nocken 321 ausgestaltet sind, die sich in die beiden Nuten der Abstandsstange 32 nach innen erstrecken. In der in Fig. 2 gezeigten Grundstellung sind die Nocken 321 jeweils von den die Nuten begrenzenden Anschlägen 311 beabstandet. Dabei sind die zugehörigen Abstände 35 zwischen Aussenflächen der Nocken 321 und Anschlägen 311 so ausgestaltet, dass die Abstandsstange 31 um 10° im Uhrzeigersinn und 10° im Gegenuhrzeigersinn aus der Grundstellung um seine Längsachse 33 rotiert werden kann. Auf diese Weise kann die Führung in einer senkrecht zur ersten Kippebene 5 liegenden zweiten Kippebene 6 in Bezug auf das Richtelement 2 über einen zweiten Kippwinkelbereich verkippt werden.

In Fig. 3 ist die Implantatbohrungspositioniervorrichtung 1 in einer Aufsicht gezeigt. Dabei ist ersichtlich, dass die Abstandsstange 31 die Teleskophülse 32 des Abstandselements 3 durchragt. Die Abstandsstange 31 kann entlang seiner Längsachse 33 bezüglich der Teleskophülse 32 verschoben werden, so dass ein Abstand zwischen Führung 4 und Richtelement 2 eingestellt werden kann. Auch sind die am Gelenkkopf 312 der Abstandsstange 31 ausgebildeten flächigen Anschläge 313 sichtbar. Weiter ist in Fig. 3 ersichtlich, dass die Führungshülse 41 über seine ganze Länge eine seitliche Öffnung 44 aufweist. Von der Dimension her entspricht die Öffnung 44 einem Viertel des Zylinders der Führungshülse 41. Sie ermöglicht, dass das Innere der Führungshülse 41 von aussen einsehbar ist.

In Anwendung der Implantatbohrungspositioniervorrichtung 1 zum Applizieren mehrerer Bohrungen in einem Kieferknochen wird in einem für den Operateur gut sichtbaren Bereich eine Referenzbohrung mittels eines geeigneten Instruments im Kieferknochen angebracht und ein Referenzimplantat 21 in die Referenzbohrung eingesetzt. Auf das okklusale Ende des Referenzimplantats 21 wird die Implantatbefestigung des Richtelements 2 aufgesetzt, wobei die Implantatbefestigung dem Typ des Referenzimplantats 21 entsprechend geeignet ausgestaltet ist. Der Körperabschnitt 22 erstreckt sich in der axialen Richtung 23 vom Referenzimplantat 21.

Das Instrument wird in der Führungshülse 41 der Führung 4 angeordnet. Über ein Verschieben der Montagehülse 34 des Abstandselements 3 entlang des Körperabschnitts 22 des Richtelements 2, über ein Verdrehen der Montagehülse 34 des Abstandselements 3 um den Körperabschnitt 22 des Richtelements 2 herum und über ein Verschieben des Abstandsstange 31 entlang seiner Längsachse 33 bezüglich der Teleskophülse 32 wird das Instrument beziehungsweise die Führung 4 genau an einer Stelle des Kieferknochens positioniert, an der eine zweite Bohrung appliziert werden soll. Über ein Verkippen der Führung 4 in der ersten Kippachse 5 und in der zweiten Kippachse 6 wird dann das Instrument so ausgerichtet, dass die Bohrachse bestimmungsgemäss beziehungsweise an die Gegebenheiten angepasst möglichst ideal liegt. Mittels des in der Führung 4 angeordneten Instruments wird dann die zweite Bohrung im Kieferknochen appliziert.

Auf die gleiche Weise können auch noch weitere Bohrungen am Kieferknochen appliziert werden. In dem der erste Kippwinkelbereich und der zweite Kippwinkelbereich über die vorstehend beschriebene Ausgestaltung der Abstandsstange 31 und der Teleskophülse 32 beziehungsweise des aus dem Gelenkkopf 312 und der Gelenkzange 42 gebildeten Scharniergelenks genau vordefiniert ist, kann gewährleistet werden, dass die Disparallelitäten zwischen den Bohrungen in einem vordefinierten Rahmen bleiben. Somit können mittels der Implantatbohrungspositioniervorrichtung 1 auf effiziente einfache Weise mehrere für eine vorgesehene Anwendung ausreichend parallele Bohrungen im Kieferknochen appliziert werden.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen.

Die vorliegende Offenbarung umfasst auch Ausführungsformen mit jeglicher Kombination von Merkmalen, die vorstehend oder nachfolgend zu verschiedenen Ausführungsformen genannt oder gezeigt sind. Sie umfasst ebenfalls einzelne Merkmale in den Figuren, auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschließlich die in den Ansprüchen beziehungsweise in den Ausführungsbeispielen beschriebenen Merkmale umfasst sowie auch solche, die zusätzliche andere Merkmale umfassen.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt. Alle Bezugszeichen in den Ansprüchen sind nicht als den Umfang der Ansprüche einschränkend zu verstehen.

## Patentansprüche

1. Implantatbohrungspositioniervorrichtung (1) zum Positionieren eines Instruments für das Applizieren einer Bohrung in einem Kieferknochen, umfassend
ein Richtelement (2) mit einem Körperabschnitt (22) und Verbindungsmitteln, die mit einem im Kieferknochen eingesetzten Referenzimplantat (21) verbindbar sind, wobei sich der Körperabschnitt (22) von den Verbindungsmitteln in eine axiale Richtung (23) erstreckt, und
eine Führung (4), an der das Instrument anordbar ist und die so mit dem Richtelement (2) verbunden ist, dass in einer Grundstellung eine Bohrachse (43) des Instruments parallel zur axialen Richtung (23) des Körperabschnitts (22) des Richtelements (2) verläuft,
wobei die Führung (4) über einen vordefinierten Bereich in Bezug auf das Richtelement (2) aus der Grundstellung verkippbar ist.

2. Implantatbohrungspositioniervorrichtung (1) nach Anspruch 1, bei der die Führung (4) in einer die Bohrachse (43) umfassenden ersten Kippebene (5) in Bezug auf das Richtelement (2) über einen ersten Kippwinkelbereich verkippbar ist.

3. Implantatbohrungspositioniervorrichtung (1) nach Anspruch 2, bei der die Führung (4) in einer im Wesentlichen senkrecht zur ersten Kippebene (5) liegenden zweiten Kippebene (6) in Bezug auf das Richtelement (2) über einen zweiten Kippwinkelbereich verkippbar ist.

4. Implantatbohrungspositioniervorrichtung (1) nach einem der vorangehenden Ansprüche, die ein am Richtelement (2) montiertes Abstandselement (3) umfasst, das sich in einem bezüglich der axialen Richtung (23) des Körperabschnitts (22) des Richtelements (2) vordefinierten Abstandswinkel zum Richtelement (2) erstreckt, wobei die Führung (4) verkippbar am Abstandselement (3) montiert ist.

5. Implantatbohrungspositioniervorrichtung (1) nach Anspruch 4, bei der die Führung (4) über ein Gelenk (312, 42, 44) verkippbar am Abstandselement (3) montiert ist.

6. Implantatbohrungspositioniervorrichtung (1) nach Anspruch 5, bei der das Gelenk (312, 42, 44) mindestens zwei Anschläge (313) aufweist, die eine Auslenkung des Gelenks (312, 42, 44) begrenzen.

7. Implantatbohrungspositioniervorrichtung (1) nach einem der Ansprüche 4 bis 6, bei der das Abstandselement (3) um seine Längsachse (33) rotierbar ist.

8. Implantatbohrungspositioniervorrichtung (1) nach Anspruch 7, bei der das Abstandselement (3) mindestens zwei Anschläge (311) aufweist, die eine Rotation des Abstandselements (3) um seine Längsachse (33) in beide Richtungen begrenzen.

9. Implantatbohrungspositioniervorrichtung (1) nach einem der Ansprüche 4 bis 8, bei der das Abstandselement (3) entlang der axialen Richtung (23) verschiebbar am Richtelement (2) montiert ist.

10. Implantatbohrungspositioniervorrichtung (1) nach einem der Ansprüche 4 bis 9, bei der das Abstandselement (3) um das Richtelement (2) herum drehbar ist.

11. Implantatbohrungspositioniervorrichtung (1) nach einem der Ansprüche 4 bis 10, bei der das Abstandselement (3) längenverstellbar ausgestaltet ist, so dass ein Abstand zwischen der Führung (4) und dem Richtelement (2) einstellbar ist.

12. Implantatbohrungspositioniervorrichtung (1) nach Anspruch 11, bei der das Abstandselement (3) eine Teleskophülse (32) und eine Stange (31) umfasst,
wobei die Stange (31) die Teleskophülse (32) durchragt und wobei die Stange (31) entlang seiner Längsachse (33) bezüglich der Teleskophülse (32) verschiebbar ist.

13. Implantatbohrungspositioniervorrichtung (1) nach Anspruch 12, wobei die Teleskophülse (32) des Abstandselements (3) um die axiale Richtung (23) herum drehbar und entlang der axialen Richtung (23) verschiebbar am Körperabschnitt (22) des Richtelements (2) montiert ist.

14. Implantatbohrungspositioniervorrichtung (1) nach einem der vorangehenden Ansprüche, bei dem die Führung (4) eine Führungshülse (41) umfasst.

15. Implantatbohrungspositioniervorrichtung (1) nach Anspruch 14, bei der die Führungshülse (41) einseitig offen ausgestaltet ist.
